# EUROPEAN PATENT APPLICATION

(11) **EP 4 603 561 A1**
(43) Date of publication of application: **20.08.2025**
(21) Application number: 24382168.3
(22) Date of filing: 19.02.2024
(51) Int. Cl.: C09K 11/02, B82Y 30/00, B82Y 40/00, C09K 11/66

(54) **A QUANTUM DOT POPULATION COMPRISING METAL CHALCOGENIDE QUANTUM DOTS, A METHOD FOR OBTAINING THE QUANTUM DOT POPULATION AND AN OPTOELECTRONIC DEVICE COMPRISING THE QUANTUM DOT POPULATION**

(71) Applicant: ICFO - Institut de Ciències Fotòniques, 08860, Castelldefels (ES); Institució Catalana de Recerca i Estudis Avançats (ICREA), 08010 Barcelona (ES)
(72) Inventor: KONSTANTATOS, Gerasimos, 08860 CASTELLDEFELS (ES); MANDAL, Debranjan, 08860 CASTELLDEFELS (ES)
(74) Representative: Ponti & Partners, S.L.P

(57) **Abstract**

The present invention relates to a quantum dot population comprising metal chalcogenide quantum dots, wherein the metal chalcogenide quantum dots comprise metal thiolate ligands.

The present invention also relates to a method for obtaining the quantum dot population of the invention, and to an optoelectronic device comprising the quantum dot population.

## Description

PDC2021-120733-I00 funded by MCIN/AEI/ 10.13039/501100011033 and by the "European Union NextGenerationEU/PRTR".

Results incorporated in this standard have received funding from the European Research Council Executive Agency (ERCEA) under the European Union's Horizon Europe programme (grant agreement No 101069217).

### FIELD OF THE INVENTION

The present invention generally relates, in a first aspect, to a quantum dot population comprising metal chalcogenide quantum dots comprising metal thiolate ligands.

A second aspect of the present invention relates to a method for obtaining the quantum dot population of the first aspect of the present invention.

A third aspect of the present invention relates to an optoelectronic device comprising the quantum dot population of the first aspect of the present invention.

### BACKGROUND OF THE INVENTION

The current progress of modern technologies such as autonomous driving, augmented reality, optical communications, bioimaging, surveillance, spectroscopy, etc., has increased enormous demand on high performing and cost-effective Infrared (IR) optoelectronic materials [1-8]. The existing technology for IR optoelectronic materials mainly depends on epitaxially grown semiconductors for example InGaAs or Ge; however, this enhances their cost and limits their integration on custom grade silicon circuit [4].

Colloidal quantum dots (CQDs), awarded for their size tunable bandgap in IR, low cost and solution processability, have created an exceptional interest for their application in optoelectronics devices with ease of integration on silicon-based read-out integrated circuits [1-8]. Lead chalcogenide CQDs are particular of interest for their large Bohr exciton radius, low permittivity, size tunable high absorption in IR and ease of solution processing on a custom grade substrate. So far, the development of CQDs IR optoelectronic devices were achieved from rapid progress of surface chemistry and device architecture [1-10].

The performance of CQDs made various optoelectronic devices has been steadily improving over time as research efforts have addressed the post-synthesis processes responsible for assembling CQDs into semiconductor thin films with the aid of new small ligand passivation chemistry [9-12]. This process is used to make CQDs films conductive. However, this post synthesis small ligand exchange process leads to random packing, fusion of QDs, heterogenous aggregation and poor monodispersity of CQDs in films [14]. As a result, the energetic inhomogeneity arises in the thin films. The inhomogeneous energy landscape creates the band tail states in both valance and conduction band of QDs.

The most conventional way of doing ligand exchange is layer by layer (LBL) solid state ligand exchange process. However, there is poor control over this LBL solid state ligand exchange process which is very much time consuming and also causes insufficient ligand exchange, heterogenous QDs fusion, organic residues in CQDs solids, and high probability of surface oxidation during exchange [10,14]. The incomplete surface passivation accelerates the degradation of QDs surface by atmospheric oxygen, moisture and thermal heating. The multistep deposition and the issues with their stability are considered to be the major obstacle for their commercial application of optoelectronics devices.

On the other hand, the solution phase ligand (SPL) exchange process allows to grow a thicker film from a single step deposition, which is very much needed from manufacturing point of view. Furthermore, this SPL exchange process offers better surface passivation of QDs due to more compact surface coverage by ligand, application-oriented ligand engineering and more control over facet specific ligand selection during exchange [9,11,14].

To date, CQD inks have been based on metal halides [9,11,14] and the ink-based optoelectronics devices such as solar cells, photodetectors, etc. have outperformed the conventional solid state ligand exchange devices [6,9,11,14]. However, the use of halide ions leads to device instability due to fact that they easily migrate across the device under applying electrical bias [15]. Moreover, for certain kind of device fabrication, it is very much needed post annealing treatment after making the thin film, which also unavoidably removes the halide ions from the surface [14]. The detachment of halide ions from QDs surface leads to deterioration of surface and a non-uniform QDs aggregation [12-14].

It is, therefore, necessary to provide an alternative to the state of the art by providing quantum dots which do not possess the above mentioned drawbacks of those quantum dots of the prior art exclusively based on halide ligands.

### SUMMARY OF THE INVENTION

To that end, the present invention relates, in a first aspect, to a quantum dot population comprising metal chalcogenide quantum dots, wherein, in contrast to the quantum dot populations of the prior art, the metal chalcogenide quantum dots comprise metal thiolate ligands.

For an embodiment, the metal chalcogenide quantum dots comprise a combination of metal thiolate ligands and halide ligands, wherein the metal thiolate ligands range from 100% down to 10% and the halide ligands range from 0% to 90%, depending on the desired application.

For a preferred embodiment, the metal chalcogenide quantum dots are free of halide ions.

In an embodiment, the metal chalcogenide quantum dots are lead chalcogenide quantum dots.

For an embodiment, the metal chalcogenide quantum dots are atomically passivated by metal thiolate ligands.

According to an embodiment, the metal thiolate ligands reconstruct the quantum dot surface and passivates the respective metal chalcogenide core.

In an embodiment, the metal thiolate ligands passivate the respective metal chalcogenide core with at least one layer of metal thiolate.

Depending on the embodiment, the metal thiolate of the metal thiolate ligands is at least one of lead thiolate, zinc thiolate, cadmium thiolate, or a combination thereof.

For an embodiment, the quantum dot population of the first aspect of the present invention comprises first-sized metal chalcogenide quantum dots and/or second-sized metal chalcogenide quantum dots, wherein the second-sized metal chalcogenide quantum dots are bigger than the first-sized metal chalcogenide quantum dots, wherein the metal thiolate of the metal thiolate ligands of the first-sized metal chalcogenide quantum dots are in a concentration of (0.1<x<5) M and the metal thiolate of the metal thiolate ligands of the second-sized metal chalcogenide quantum dots are in a concentration of (0.15<x<10) M.

In an embodiment, metal chalcogenide quantum dots further comprise metal acetate Z-type ligands.

For an embodiment of the quantum dot population of the first aspect of the present invention, the metal thiolate ligands have chemical structure M-S-R-X, where M stands for the metal, where R = (CH₂)ₙ with n= 2, 3, 4, 5,......., or R= CaHs or R = C₆H₄, or R = C₆H₄(CH₂)ₙ with n=1,2, and X= CI or Br or I, wherein R can have a form of a carbon alkyl chain or benzene structure or combinations thereof.

For an embodiment, the thiol ligand used for making metal thiolate precursor have chemical structure HS-R-X, where R= (CH₂) ₙ n= 2, 3, 4, 5........or C₆H₄, C₆H₄(CH₂)ₙ n=1,2 and X= C!, Br and I. R can have a form of a carbon alkylchain or benzene structure or combinations thereof.

Depending on the embodiment, the chalcogenide ion of the metal chalcogenide of the metal chalcogenide quantum dots is selected from sulfide, selenide, telluride, or combinations thereof.

In other words, the metal chalcogenide is represented by MᵢXⱼ in which M stands for metal and X can be S, Se, Te, or combinations thereof, and wherein i and j is 1, for M(II), and wherein i is 1 and j is 2 for M(IV).

Depending on the embodiment, the quantum dot population of the first aspect of the present invention is provided in the form of a sheet, a layer, and/or an ink.

In a second aspect, the present invention relates to a method for obtaining the quantum dot population of the first aspect of the invention, wherein the method comprises obtaining metal chalcogenide quantum dots with metal thiolate ligands.

For an embodiment, the method of the second aspect of the invention comprises performing the following steps:
- preparing a ligand solution including said metal thiolate ligands by mixing metal acetate and thiol in a polar solvent, wherein said metal thiolate ligands have a chain having less than eleven carbons and/or having at least one benzene ring;
- preparing a metal chalcogenide quantum dot solution, wherein said metal chalcogenide quantum dots are capped, for stabilizing purposes, with hydrocarbon organic ligands with a chain having more than ten carbons and dispersed in a non-polar solvent which is not miscible with said polar solvent; and
- doing phase transfer ligand exchange by mixing said metal chalcogenide quantum dot solution with said ligand solution, wherein two phases are obtained: a top phase containing said non-polar solvent and exchanged hydrocarbon organic ligands, and a bottom phase containing ligand-exchanged metal chalcogenide quantum dots.

Depending on the embodiment, the step of preparing a metal chalcogenide quantum dot solution is carried out by any of the following methods: a hot injection method, a solvothermal process, a hydrothermal process, a heat-up method, an organometallic precursor synthesis of QDs, etc.

The top transparent non-polar solvent contains exchanged long chain (more than ten carbons) hydrocarbon ligands and is discarded to get rid of long chain hydrocarbon ligand and, for an embodiment, extra non-polar solvent is further added, preferably twice, for additional cleaning.

For an embodiment, before the ligand exchange step, the metal chalcogenide quantum dots are passivated by oleic acid, oleylamine, or combinations thereof.

In an embodiment, the method comprises varying the concentration of capping ligand, metal to chalcogen precursor ratio and injection temperature, so that different sizes of quantum dots with distinct excitonic peak are synthesized.

The above mentioned ligand exchange is a solution phase ligand-exchange made on surface of the metal chalcogenide quantum dots, for providing them with shorter ligands than the longer carbon chain organic ligands, and/or with benzene ring(s). Surface ligand-exchange is to improve the conductivity, for example of a nanocrystal film comprising those metal chalcogenide quantum dots for optoelectronic devices.

For the ligand exchange, for an embodiment, a 2D layered metal thiolate complex is made from metal acetate and thiol ligand precursors. The carbon chain length of thiol ligand and metal can also be chosen selectively for compact passivation on the desired quantum dots surface.

For an embodiment, the polar solvent is N, N-dimethylformamide and the non-polar solvent is octane.

Thanks to above-mentioned ligand exchange process, the lead chalcogenide quantum dots are very well-dispersed and stable in polar solvent.

For some embodiments of the method of the second aspect of the invention, the amount of metal thiolate needed for exchange depends on the size of quantum dots. The exposed surface facets of quantum dots vary on their size; smaller size quantum dots have more polar (111) facets whereas bigger size quantum dots stabilize with non-polar (100) facets. For smaller size quantum dots, lesser amount(x) of metal thiolate (0.1 <x<5) M works better compared to bigger size quantum dots (0.15<x<10) M.

For an embodiment, the halide ions of metal thiolate ligand precursor are used to provide better colloidal stability of exchanged quantum dots in polar solvent.

For some embodiment, the metal thiol ligand is explicitly chosen or combinations of different metal thiol ligands used for compact passivation.

For an embodiment, a little amount of excess metal acetate precursor of metal thiolate ligand solution is used because it works better for bigger size QDs due to Z-type ligand passivation for neutral (100) facet passivation.

In an embodiment, the method further comprises preparing a quantum dots ink by performing the following steps:
- precipitating the ligand exchanged metal chalcogenide quantum dots by adding a polar protic solvent (such as methanol or ethanol) into said bottom phase;
- drying the precipitated ligand exchanged metal chalcogenide quantum dots under vacuum, to obtain powder; and
- dispersing the dried ligand exchanged metal chalcogenide quantum dots in a volatile solvent to make the quantum dots ink with a desired concentration.

For an implementation of that embodiment, the volatile solvent is butylamine, while for another implementation is a mixture of butylamine and a polar solvent (such as N, N-dimethylformamide) for better colloidal stability.

According to an embodiment of the method of the second aspect of the present invention, the method comprises preparing the above mentioned ink for one-step deposition, for example by spin coating, spray coating or printing to grow thick film (100nm to 550nm) with the obtained metal thiolates passivated metal chalcogenide quantum dots.

The metal thiolates passivated ink is thermally more stable than any prior art of quantum dots ink.

For some embodiments, an additional metal thiolate ligand or metal acetate ligand is further added in the mixture of volatile and polar solvent for dual passivation of the quantum dots ink. This dual passivation improves air stability and enhances the photoluminescence quantum yield.

In a third aspect, the present invention relates to an optoelectronic device, comprising the quantum dot population of the first aspect of the present invention, for any of its embodiments.

For some embodiments, the optoelectronic device of the third aspect of the present invention comprises the quantum dot population obtained with the method of the second aspect of the invention, for any of its embodiments.

For an embodiment of the optoelectronic device of the third aspect of the present invention, the quantum dot population is provided in the form of a sheet or layer previously formed or by spin-coating or by printing the above described quantum dots ink onto a substrate or lower sheet or layer.

According to an embodiment, the optoelectronic device of the third aspect of the present invention implements a photodetector device, while for other embodiments the optoelectronic device implements a light emitting device or a solar cell.

For an embodiment, the optoelectronic device comprises a light absorbing structure (such as a sheet, film or layer) comprising the above mentioned quantum dot population and made to absorb, in the visible spectrum and/or at least one of infrared light, near infrared light, and short-wavelength infrared light.

For an embodiment, the optoelectronic device is a photodetector device constructed as follows:
a substrate;
a first electrode made by an electrically conductive layer constructed over the mentioned substrate;
an active light absorbing layer comprising the quantum dot population of the first aspect of the present invention, for example in the form of an ink arranged over the first electrically conductive layer from a single step deposition; and
a second electrode built by a second electrically conductive layer arranged over the said active light absorbing layer.

For an embodiment, the light absorbing active layer thickness is varied form the quantum dots ink concentration prior to one step deposition.

For another embodiment of the optoelectronic device of the third aspect of the present invention, the device is a light emitting device (LED). The emitting quantum dots population of the LED are embedded in a host matrix of quantum dots. The emitting quantum dots ink and host matrix quantum dots ink are blended prior to fabrication. The device comprises the above mentioned blended quantum dots ink film of host and emitting quantum dots, sandwiched between first and second electrically conductive layers.

The host matrix quantum dots supplies charge carriers to the emitting quantum dots population. In binary blend of quantum dots, the host matrix quantum dots are arranged to donate carriers to the emitter quantum dots, whereas the emitter quantum dots matrix is organized to accept those donated carriers.

For some embodiment, the application of the above described ligand exchange is carried out for host and emitter quantum dots in solution phase separately, before making the blended ink for single step deposition. In contrast to prior art LBL binary blend LED device fabrication, where the solid-state ligand exchange is carried out after blending the host and emitter LBL binary blends, which does not suit for matrix and emitter LBL binary blend specific different ligand passivation.

### BRIEF DESCRIPTION OF THE FIGURES

In the following some preferred embodiments of the invention will be described with reference to the enclosed figures. They are provided only for illustration purposes without however limiting the scope of the invention. In accordance with common practice, the components in the figures are drawn to emphasize specific features and they are not drawn to the right scale.
Figure 1 represents the ligand exchange process performed for an embodiment of the method of the second aspect of the present invention, to obtain each of the quantum dots of the quantum dots population of the first aspect.
Figure 2 is a plot showing the absorption spectrums of the synthesized oleic acid capped quantum dots and, after ligand exchange, the quantum dots with metal thiolate ligands of the population of the first aspect of the present invention, and obtained according to the method of the second aspect, according to respective embodiments.
Figure 3 is a plot showing the x-ray diffraction pattern (XRD) of the metal thiolate ligand precursor used for ligand exchange and compared with pure metal acetate.
Figure 4 is a plot of XRD pattern for different size as synthesized quantum dots and metal thiolate exchanged quantum dots ink, this is the characterization for the second aspect of the present invention, for an embodiment.
Figure 5 and 6 are plots of temperature dependant thermal study of absorption spectrum and XRD pattern for metal thiolates passivated quantum dots ink having excitonic peat at 1340 nm excitonic peak, for an embodiment of the present invention.
Figures 7 and 8 are plots of standard metal halide exchanged quantum dots ink having excitonic peat at 1340 nm excitonic peak; temperature dependant thermal study of absorption spectrum and XRD pattern for metal thiolates quantum dots ink, i.e. for the one of the present invention, for an embodiment. These plots are for thermal stability comparison with the present invention.
Figure 9 is a plot of temperature dependant absorption and photoluminescence study for another size quantum dots ink having excitonic peak at 1540 nm, for an embodiment of the present invention.
Figure 10 is a schematic of a photodetector device of the third aspect of the present invention, for an embodiment for which the quantum dots population of the first aspect are used, provided for example in the form of an ink, as an active layer.
Figure 11 is a plot showing the current density-voltage(J-V) characteristics of the photodetector device of Figure 10 measured in dark, experimentally obtained from a built prototype of the photodetector device.
Figure 12 is a plot of External Quantum Efficiency (EQE) vs. wavelength of the photodetector device of Figure 10, experimentally obtained from a built prototype of the photodetector device.
Figure 13 is a schematic of the architecture of a LED device of the third aspect of the present invention, for an embodiment for which it is made with a host and emitter blend quantum dots ink constituting the quantum dots population of the first aspect.
Fig 14 is the electroluminescence (EL) spectra of the LED device of Figure 13 plotted against wavelength, experimentally obtained from a built prototype of the LED device. The spectra is collected at 0.8 V bias.
Figure 15 is a plot of the EQE of the LED device of Figure 13 plotted against injected current density, experimentally obtained from a built prototype of the LED device.
Figure 16 is a plot of the EQE of the LED device of Figure 13 against Radiance, experimentally obtained from a built prototype of the LED device.

### DESCRIPTION OF THE PREFERRED EMBODIMENTS

In the present section, by means of several experiments detailed below, the present inventors demonstrate the feasibility and good results offered by the present invention, Specifically, it is here demonstrated that the present invention provides a robust solution phase ligand exchange strategy for lead chalcogenide quantum dots that allows to make stable quantum dots (QDs) ink for single step deposition.

Although in the following, experiments have been made with the quantum dots population of the present invention in the form of an ink, similar results would be obtained if the populations is not in the form of an ink, but of another type of form, such as a non-printed layer or sheet.

In contrast to prior solution phase ligand exchange reports, the present inventors posit that instead of relying exclusively on metal halides [14] or functional thiol ligand such as 3-Mercapto propanoic acid (MPA) [16],1-Thioglycerol (TG) or Thiolactic acid (TLA) [17], the use of metal thiolates ligand would be more robust and efficient to make stable QDs ink. This is shown in Table1 below.

The colloidal, ambient and thermal stability of metal halide exchanged QDs ink is easily disrupted due to weak electrostatic interaction of ions. Although the colloidal stability of functional thiol exchanged QDs are quite good enough in polar solvents due to solvent and functional group interaction, but growing thick film is not favorable from these QDs ink [17] due to emulsion formation with solvent molecule. The optoelectronic devices from thiol exchanged QDs ink do not perform well compared to metal halide exchanged QDs ink [17].

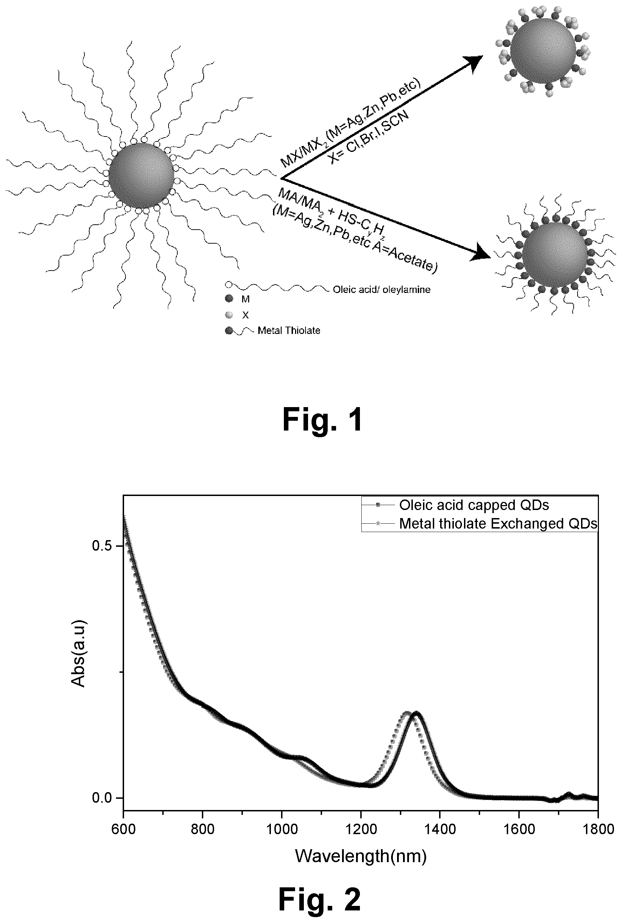

Unlike the prior approaches [14,17], the present invention is based on a different ligand passivation strategy where 2D metal thiolates are used as ligand for exchange. Metal thiolates reconstruct the QDs surface and, for some embodiments, makes a monolayer of metal thiolate (Fig. 1). In doing so, the present invention exploits the advances made in QDs in terms of long-term colloidal stability, ambient and thermal stability and electronic properties of QDs films. All these improvements are highlighted in the performance of those QDs made optoelectronic device.

The present inventors have synthesized lead sulfide QDs (method section) following an embodiment of the method of the second aspect of the present invention and performed solution phase ligand exchange with metal thiolates. The 23 nm red shift in solution phase absorption spectra of QDs after exchange signifies the additional metal thiolate layer formation on QDs surface (Fig. 2). The FWHM (Full Width at Half Maximum) value of absorption spectra (whereas for as synthesized oleic acid capped QDs- 101 nm, after exchange-97nm) suggests that particle size distribution and monodispersity remains intact even after exchange with small metal thiolate ligand.

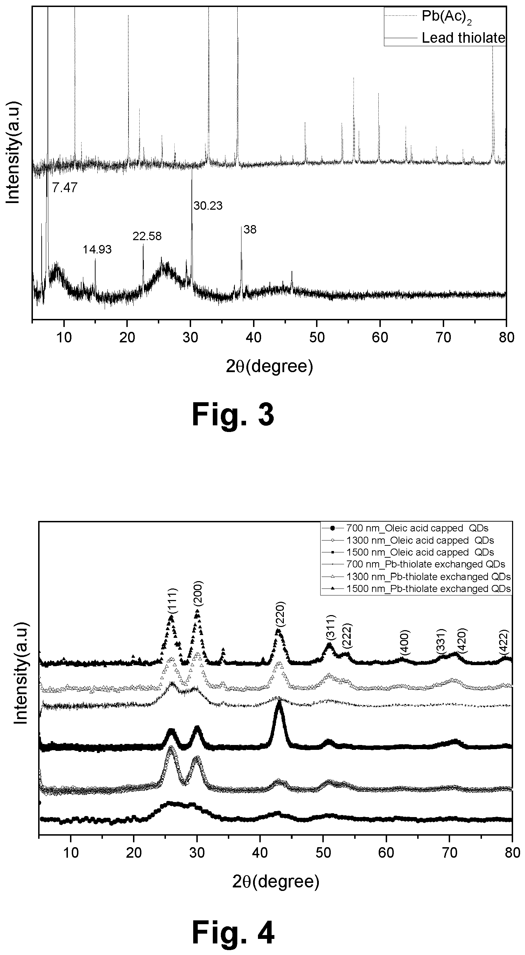

Prior to ligand exchange, the 2D layered of metal thiolates ligands [18] are characterized from XRD (Fig. 3). The narrow equidistant peak (2θ~7.6 degree) agrees with the layered structure. This present invented solution phase ligand exchange process suits for different size QDs also, the XRD pattern for three different size lead chalcogenide QDs before and after exchange is shown in Fig. 4. Most importantly, the sharp equidistant peaks of metal thiolates are not observed in the XRD pattern for exchanged QDs, which essentially suggests that metal thiolates atomically passivate the QDs surface.

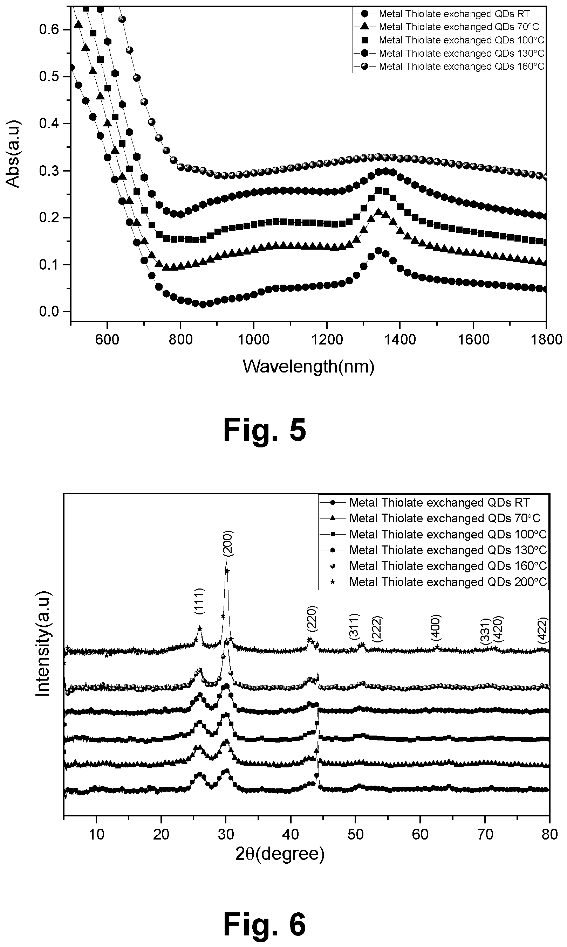

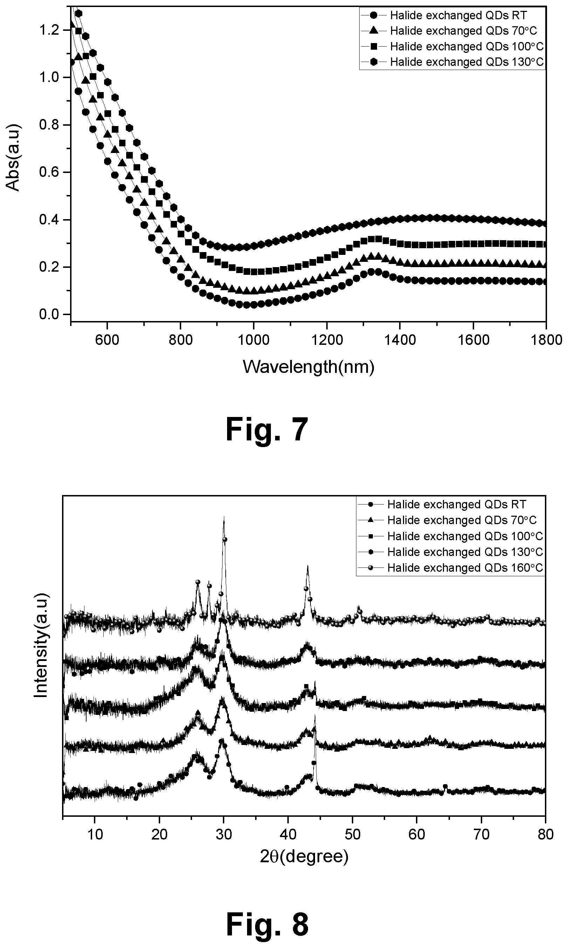

To check the thermal stability of the thin films from the present invented QDs ink, thin film absorption and XRD pattern are studied with different temperature (Fig. 5 and Fig. 6). For a prior art SPL exchange comparison, the same experiment is carried out for metal halide exchanged QDs (Fig7 & Fig8). Metal thiolates passivated QDs ink preserve quantum confinement up to 130°C-150°C whereas metal halides passivated QDs start to degrade after 100°C.

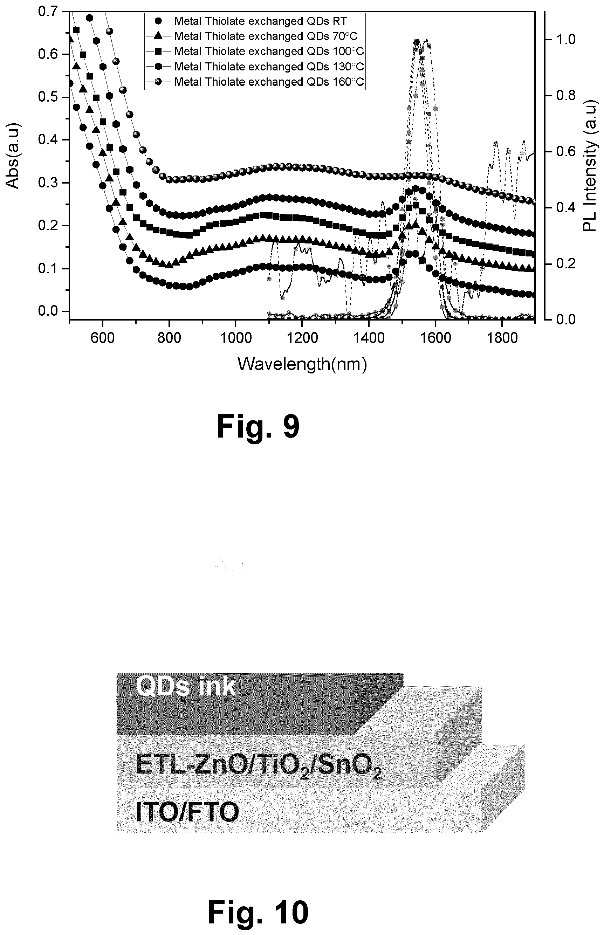

The thermal stability for another size metal thiolate exchanged QDs is also studied from absorption and photoluminescence experiments (Fig. 9). This also shows the similar kind of thermal stability (130°C-150°C), most of all, as these QDs preserve their emission spectra up to 130°C.

Furthermore, to shed insights on the performance potential of the presently invented metal thiolates passivated QDs ink in optoelectronic devices, the present inventors have fabricated photodetector and LED devices comprising the invented ligand exchanged QDs ink.

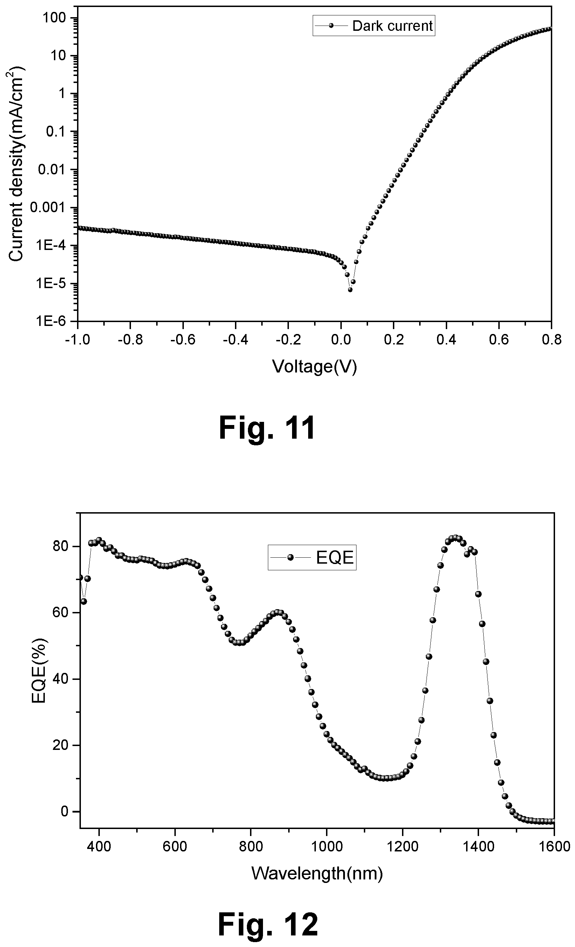

A schematic of the photodetector device is shown Fig. 10, where a thick active layer of metal thiolates passivated QDs ink is deposited from one step deposition to absorb light. The photodetector device structure follows as a photodiode. The active layer of QDs ink is sandwiched between an electron transport layer (ETL) and a hole transport layer (HTL). The dark current density vs voltage (J-V) characteristics of a made photodetector device comprised with QDs ink having excitonic peak at 1340nm is shown in Fig. 11. The dark current at -1V reverse bias is around 200nA/cm². The detector operating at 1340 nm also exhibit a very high external quantum efficiency (EQE) at 0V bias (Fig. 12).

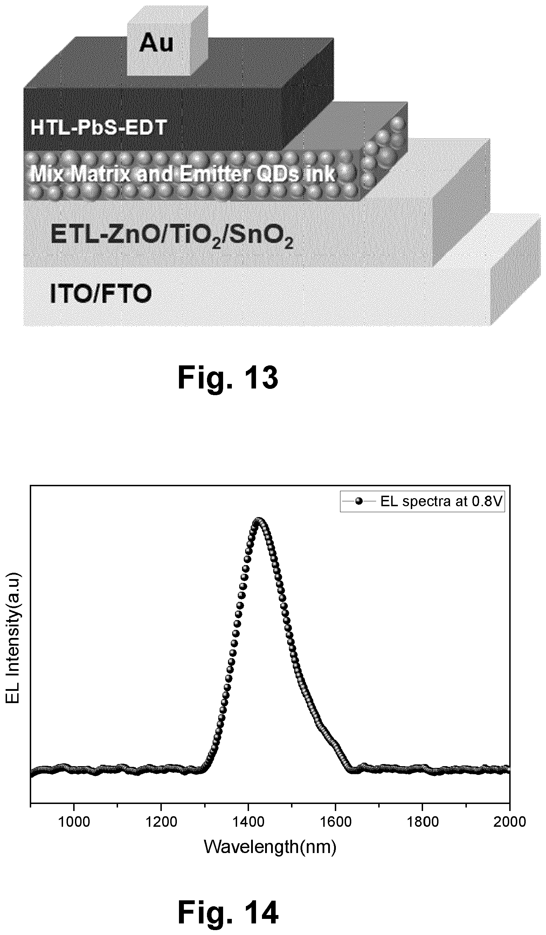

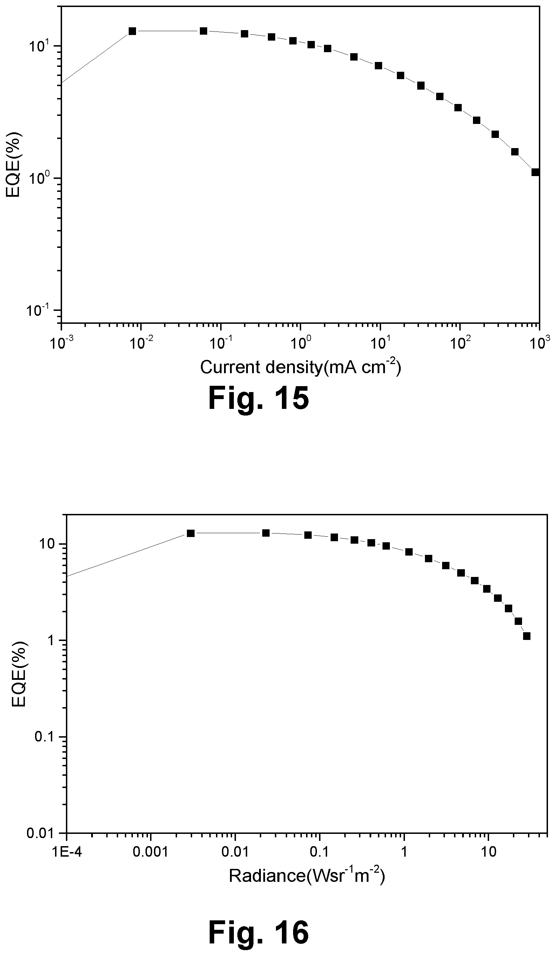

For a LED device, the presently invented ligand exchanged QDs is used to make the emissive layer with a host matrix QDs ink. The LED device architecture is shown in Fig. 13. The emissive layer is composed with a binary blend of small size QDs as host matrix having larger bandgap for carrier supplier to a large PbS QDs with smaller bandgap act as a carrier acceptor and emitting QDs [19]. The EL spectra of a made LED device composed with host matrix having excitonic peak at 700 nm and emissive QDs at 1340 nm is shown in Fig.14. The EQE of the LED is shown in Fig. 15 as a function of current density. The peak EQE is around 13%. Fig. 16 shows the EQE of the device plotted against radiance. The maximum radiance for this device is 29 Wsr⁻¹m⁻² at 3V.

The depicted photodetector and LED devices comprise a substrate made of ITO/FTO, an ETL layer made of ZnO, TiO₂, or SnO₂, a HTL layer made of PbS-EDT, and a top electrode made ofAu. However other materials could be used for any of those layers, is they are considered appropriate for the function to be performed by the respective layer.

In summary, the present inventors have developed a robust solution phase ligand exchange strategy for metal chalcogenide QDs to make, for example, a QDs ink for single step deposition. The ligand exchanged QDs have an excellent long-term colloidal stability and monodispersity in the solution phase. The thin film made from this QDs ink has an exceptional ambient and thermal stability in comparison with the prior art halide exchanged QDs inks. The present inventors further demonstrate the photodetector and LED device composed with this invented ligand exchanged QDs. The photodetector device shows very low dark current with very high EQE at peak wavelength of the QDs. The performance of the LED device is also remarkable with very EQE and radiance value. The present invention further leads to the facile integration of QDs ink of different size on CMOS compatible low-cost multispectral imaging system.

### Experimental Section:

This section describes QDs synthesis, ligand exchange process and QDs ink formation for two different size QDs

### Example 1:

PbS QDs ink with excitonic peak at -1300 nm

### Synthesis of PbS QDs -1300 nm:

Pbs QDs with excitonic peak -1300 nm are synthesized by a previously reported multi-injection method [5]. Typically, 0.446gm (2 mmol) PbO, 3.8mL oleic acid and 50 mL octadecene (ODE) were kept under vacuum for 2 hours at 95°C. Once the transparent clear solution of lead oleate is formed, the reaction condition is transformed from vacuum to Argon and the reaction temperature is raised to 100°C. A solution of 90 µL hexamethyldisilathiane (TMS) in 3 mL ODE is quickly injected, then after 6 minutes, a second injection of 65 µL of TMS in 9 mL ODE is added dropwise. Then the heating is stopped immediately and the solution is cooled down gradually to room temperature.

After reaching at room temperature, the QDs are precipitated by adding acetone, followed by centrifugation. The QDs are further purified for another three times by dispersing and precipitating using toluene/acetone as solvent/antisolvent. The final QDs are dispersed in octane with a concentration of 30 mg/mL for solution phase ligand exchange.

### Preparation of Lead thiolate Ligand:

The lead thiolate complex is made by mixing lead acetate salt and thiol ligand in a high polarity solvent. The lead thiolate ligand concentration is varied in a range of 0.01M to 10M.

### Solution Phase Ligand Exchange:

The oleic acid capped QDs solution is diluted to a concentration between 1mg/mLand 100 mg/mL. For a given amount of colloidal QDs, the minimum amount of lead thiolate ligand precursor is used for complete exchange. After mixing the top low polarity solvent phase is discarded and further low polarity solvent is added and discarded again after mixing. The QDs are dispersed in high polarity solvent are capped by metal thiolate ligand.

Low polarity solvents include toluene, chloroform, hexane, heptane, octane or combinations thereof. The high polarity solvent can be Dimethyl Sulfoxide (DMSO), Dimethylformamide (DMF), alcohols (e.g. ethanol), water, acetonitrile, ethylene or diethylene glycol, cyclohexanone etc.

### Ink preparation:

The exchanged QDs in the polar solvent are precipitated by adding tiny amount of less polar antisolvent. After centrifugation the QDs are dried. Then, the QDs powder is dispersed in a mixture of a highly polar solvent and an organic compound comprising an alkylchain and a functional head group. The alkylchain can comprise from 2 carbon atoms up to 8 carbon atoms and the functional group can be a carboxyl group, an amine or a thiol. The concentration ratio of the organic compound to the solvent can range from 0.1:1 up to 10:1 and preferably be in the range 1:1 to 5:1.

### Example 2:

PbS QDs ink with excitonic peak at -1500 nm

### Synthesis of PbS QDs ~1500 nm:

Pbs QDs with excitonic peak -1500 nm are also synthesized by a previously reported multi-injection method [5]. 0.446gm (2 mmol) PbO, 3.8mL oleic acid and 50 mL octadecene (ODE) were kept under vacuum for 2 hours at 95°C. Similarly, once the transparent clear solution of lead oleate is formed, the reaction condition is transformed from vacuum to Argon and the reaction temperature is raised to 100°C. A solution of 70 µL hexamethyldisilathiane (TMS) in 3 mL ODE is quickly injected, then after 6 minutes, a second injection of 100 µL of TMS in 9 mL ODE is added dropwise. Then the heating is stopped immediately and the solution is cooled down gradually to room temperature.

After reaching at room temperature, the QDs are precipitated by adding acetone, followed by centrifugation. The QDs are further purified for another three times by dispersing and precipitating using toluene/acetone as solvent/antisolvent. The final QDs are dispersed in octane with a concentration of 30 mg/mL for solution phase ligand exchange.

### Preparation of Lead thiolate Ligand:

The lead thiolate complex is prepared similarly as previously mentioned..

Solution phase ligand exchange and ink preparation process are carried out following the procedure described above for Example 1.

In the last 10 years, researchers have developed different solution phase ligand exchange strategies to make CQDs ink which permits for lossless, one-step coating of large areas in a manufacturing-compatible technique of device fabrication. Table 1 below summarizes the prior art solution phase ligand exchange processes used different ligand chemistry to make quantum dots ink for single step deposition, together with the one carried out according to the present invention (last row of the table).

Initially, small chain organic thiol molecules which were used for solid state LBL device fabrication, having one side thiol group and on the other side another functional group like -OH or -COOH were also used for solution phase ligand exchange (Adv. Mater. 2013, 25, 5742-5749). The exchanged QDs were dispersed in volatile butylamine solvent to make ink. Later, it was realised that the device made from this ink was very much resistive towards charge transport and did not perform well compared to conventional LBL devices.

The colloidal stability of QDs may also be achieved electrostatically through adsorption of charged species to their surfaces. In this case the QDs surface charge is balanced by oppositely charged counterions surrounded in a diffuse region and makes a double layer for colloidal stability in a good solvent. Organic halide salt like Methylammonium Iodide (MAI) was introduced for exchange, where iodide ion passivates the QDs surface and methylammonium ions provide colloidal stabilization in polar solvent (ACS Nano. 2014, 8, 10321-10327). This process enables well passivated, air protected n-type QDs ink. The iodide ligand exchanged QDs ink made devices perform better compared to organic thiol exchanged QDs ink and show also better charge transport properties.

However, to remove the counter-cation methylammonium ion which inhibit the carrier transport in the film, a post annealing step was followed. Consequently, the surface bound iodide ions also removed to maintain the charge balance on QDs surface. This leads to a deterioration of surface passivation and a non-uniform aggregation of CQDs. To avoid this unwanted removal of iodide ion from the surface along with MAI ligand lead iodide (PbI₂) was introduced (Nano Lett. 2015, 15, 11, 7539-7543). A thin layer of MAPbI₃ perovskite matrix was formed on QDs surface due to having similarity in their crystal fringes.

High bandgap perovskite shell makes type-I band alignment with the QDs, and which likely to deter the carrier transport in the QD film. The ambient stability of perovskite shelled QDs ink is also a big concern due to fast degradation of perovskite matrix in presence of moisture. To make further better quality QDs ink, inorganic halometallate ion [PbX]⁺/[PbX₃]⁻ (where X=Br and I) was used for ligand exchange instead of employing organic cations to achieve colloidal stability (Nature Materials. 2017,16, 258-263). The QDs surface was passivated by halometallate anion [PbX₃]⁻ and charge balance was maintained by [PbX]⁺ cation. A very small amount of ammonium acetate (AA) was used as phase transfer catalyst to replace the oleate anion with halometallate with the aid of ammonium proton. This process overcomes the above-mentioned issues with the ink and advances a very high quality QDs ink having better carrier transport properties and more compact surface passivation without organic cation in the film and perovskite shelling. Further, hybrid halide and pseudohalide (SCN⁻) ligand passivation was demonstrated during solution ligand exchange (Adv. Mater. 2017, 29, 1700749). This hybrid passivation reduced the trap density and enhanced the transport length of QDs films.

The surface structure of CQDs depends on the crystal size. With increasing the CQD size, the part of non-polar (100) facets with low surface energy increases instead of cation rich polar (111) facets. The different structure of individual facet demands specific ligand for their passivation. Larger diameter QDs expose with more (100) facets. The ink of large diameter QDs were prepared using halometallate ion [PbX]⁺/[PbX₃]⁻ along with NaAc instead of using NH₄Ac (Adv. Mater. 2019, 1805580). The Na⁺ ions specifically passivate the (100) facets and provides better colloidal stability after solution ligand exchange compared to NH₄Ac exchange.

Although the best quality QDs ink was achieved from halometallate ion solution ligand exchange, but their long-term colloidal stability was still a major obstacle due to easy disruption of double layer of ionic ligands. Not only this, the thermal stability of these ink is not good enough for such device fabrication where post-annealing treatment is needed. This post annealing favours the formation of PbI₂ which further leads to fusion of QDs through unpassivated sites.

In order to increase the colloidal stability, a hybrid organic thiol and inorganic halometallate ligand passivation strategy was proposed (Nat Commun. 2020, 11, 103, ACS Appl. Mater. Interfaces 2021, 13, 39, 46549-46557). The thiol ligand was chosen from the concept of only thiol passivated QDs ink (Adv. Mater. 2013, 25, 5742-5749) where one end of thiol with -SH group and another end with other functional group like - OH or halide. The organic thiol ligands strongly bound with metal site of QDs along with halometallate anion and the other end functional group provided additional colloidal stability in polar solvent with halometallate cation. Wherein the previous cases (Nature Materials. 2017,16, 258-263, Adv. Mater. 2017, 29, 1700749, Adv. Mater. 2019, 1805580) the colloidal stability was mainly achieved from halometallate cation and anionic double layer formation, a weak disruption easily led to precipitation of QDs.

In spite of this improvement on colloidal stability, the major problem of this hybrid strategy is thiol loading on QDs surface. Higher percentage of thiol loading although enhances the colloidal stability but at the same time it also enhances the resistivity of the films. To balance this, the halide ions is very much essential till to date for making best quality QDs ink.

Due to incorporation of the halide ions, the thermal stability of this ink still remains challenging. Furthermore, the migration of halide ions across this ink made devices under applying electrical bias, makes more complication for their real application. As we discussed earlier the detachment of halide ions from surface leads to aggregation of QDs.

Therefore, for an alternative state of art, here in this report (last row of the table), we propose a new strategy of making QDs ink without using halide ions. By taking the concept of using the type of thiol ligand and the use of metal halide from the previous reports, we strategically design metal thiolate ligand as precursor for solution exchange. The metal thiolate passivated QDs ink have an excellent colloidal stability and thermal stability compared to halide based one. The optoelectronic devices made from this ink also performs very well as discussed earlier.

**Table 1**

| **Reference** | **Ink Chemistry** |
|---|---|
| Adv. Mater. 2013, 25, 5742-5749 | 1-thioglycerol (TG), thiolactic acid (TLA) |
| ACS Nano. 2014, 8, 10321-10327 | MAI |
| Nano Lett. 2015, 15, 11, 7539-7543 | PbI₂+MAI |
| Nature Materials. 2017,16, 258-263 | PbI₂+PbBr₂+NH₄Ac |
| Adv. Mater. 2017, 29, 1700749 | PbI₂+Pb(SCN)₂+NH₄Ac |
| Adv. Mater. 2019, 1805580 | PbI₂+PbBr₂+NaAc |
| Nat Commun. 2020, 11, 103 | PbI₂+Pb(SCN)₂+NH₄Ac+ CTA/TG/ME |
| ACS Appl. Mater. Interfaces 2021, 13, 39, 46549-46557 | PbI₂+PbBr₂+NH₄I+CPT |
| The present invention | M(Ac)₂ /MAc+Thiol Metal thiolate |

A person skilled in the art could introduce changes and modifications in the embodiments described without departing from the scope of the invention as it is defined in the attached claims.

### References:

1. Atan, O. et al. Control over Charge Carrier Mobility in the Hole Transport Layer Enables Fast Colloidal Quantum Dot Infrared Photodetectors Nano Lett. 23, 10, 4298-4303 (2023).
2. Muhammad et al. Halide-Driven Synthetic Control of InSb Colloidal Quantum Dots Enables Short-Wave Infrared Photodetectors. Adv. Mater. 2306147 (2023).
3. Sun, B.; et al. Fast Near-Infrared Photodetection Using III-V Colloidal Quantum Dots. Adv. Mater. 34, 220303 (2022).
4. Liu, J. et al. A near-infrared colloidal quantum dot imager with monolithically integrated readout circuitry. Nat Electron. 5, 443-451 (2022)
5. Christodoulou, S. et al. Single-Exciton Gain and Stimulated Emission Across the Infrared Telecom Band from Robust Heavily Doped PbS Colloidal Quantum Dots. Nano Lett. 20, 5909-5915 (2020).
6. Gao, L. et al. Efficient near-infrared light-emitting diodes based on quantum dots in layered perovskite. Nat. Photonics 14, 227-233 (2020).
7. Parmar, D.H. et al. Controlled Crystal Plane Orientation sin the ZnO Transport Layer Enable High-Responsivity, Low-Dark-Current Infrared Photodetectors. Adv. Mater. 34, 2200321 (2022).
8. Zhanng, Y. et al. Electron Transport Layers Employing Strongly Bound Ligands Enhance Stability in Colloidal Quantum Dot Infrared Photodetectors. Adv.Mater. 34, 22068 (2022).
9. Vafaie, M. et al. Colloidal quantum dot photodetectors with 10-ns response time and 80% quantum efficiency at 1,550 nm. Matter4, 1042-1053 (2021).
10. Ip, A. H. et al. Hybrid passivated colloidal quantum dot solids. Nat. Nanotechnol. 7, 577-582 (2012)
11. Kim, Y. et al. A Facet-Specific Quantum Dot Passivation Strategy for Colloid Management and Efficient Infrared Photovoltaics. Adv. Mater. 31,1805580 (2019).
12. Boles, M. A. et al. The surface science of nanocrystals. Nat. Mater. 15, 141-153 (2016)
13. Liu, M. et al. Lattice anchoring stabilizes solution-processed semiconductors. Nature, 570, 96-101 (2019).
14. Liu, M. X. et.al Hybrid organic-inorganic inks flatten the energy landscape in colloidal quantum dot solids. Nat. Mater. 16 (2), 258-263 (2017).
15. Kamat, P. V et al. Halide Ion Migration in Perovskite Nanocrystals and Nanostructures. Acc. Chem. Res. 54(3), 520-531(2021).
16. Reinhart, C et al. Colloidal 3-mercaptopropionic acid capped lead sulfide quantum dots in a low boiling point solvent. J. Am. Chem. Soc. 139, 5827- 5835 (2017).
17. Fischer, A.et al. Directly Deposited Quantum Dot Solids Using a Colloidally Stable Nanoparticle Ink. Adv. Mater. 25, 5742-5749 (2013).
18. Guo, J et al. Photochemical route towards metal sulfide nanosheets from layered metal thiolate complexes. Angew. Chem.Int, 58, 8443-8447 (2019).
19. Pradhan, S et al. High-efficiency colloidal quantum dot infrared light-emitting diodes via engineering at the supra-nanocrystalline level. Nature Nanotech 14, 72-79 (2019).

## Claims

1. A quantum dot population comprising metal chalcogenide quantum dots, **characterized in that** the metal chalcogenide quantum dots comprise metal thiolate ligands.

2. The quantum dot population of claim 1, the metal chalcogenide quantum dots are free of halides.

3. The quantum dot population of claim 1 or 2, wherein the metal chalcogenide quantum dots are lead chalcogenide quantum dots.

4. The quantum dot population of claim 1, 2 or 3, wherein the metal chalcogenide quantum dots are atomically passivated by metal thiolate ligands.

5. The quantum dot population of claim 4, wherein the metal thiolate ligands reconstruct the quantum dot surface and passivates the respective metal chalcogenide core.

6. The quantum dot population of claim 4, wherein the metal thiolate ligands passivate the respective metal chalcogenide core with at least one layer of metal thiolate.

7. The quantum dot population of any of the previous claims, wherein the metal thiolate of said metal thiolate ligands is at least one of lead thiolate, zinc thiolate, cadmium thiolate, or a combination thereof.

8. The quantum dot population of any of the previous claims, comprising first-sized metal chalcogenide quantum dots and/or second-sized metal chalcogenide quantum dots, wherein said second-sized metal chalcogenide quantum dots are bigger than said first-sized metal chalcogenide quantum dots, wherein the metal thiolate of the metal thiolate ligands of the first-sized metal chalcogenide quantum dots are in a concentration of (0.1<x<5) M and the metal thiolate of the metal thiolate ligands of the second-sized metal chalcogenide quantum dots are in a concentration of (0.15<x<10) M.

9. The quantum dot population of claim 8, wherein metal chalcogenide quantum dots further comprise metal acetate Z-type ligands.

10. The quantum dot population of any of the previous claims, wherein the metal thiolate ligands have chemical structure M-S-R-X, where M stands for the metal, where R = (CH₂)ₙ with n= 2, 3, 4, 5,......., or R= CaHs or R = C₆H₄, or R = C₆H₄(CH₂)ₙ with n=1,2, and X= CI or Br or I, wherein R can have a form of a carbon alkyl chain or benzene structure or combinations thereof.

11. A method for obtaining the quantum dot population of any of the previous claims, **characterized in that** the method comprises obtaining metal chalcogenide quantum dots with metal thiolate ligands.

12. The method of claim 11, comprising performing the following steps:
- preparing a ligand solution including said metal thiolate ligands by mixing metal acetate and thiol in a polar solvent, wherein said metal thiolate ligands have a chain having less than eleven carbons and/or having at least one benzene ring;
- preparing a metal chalcogenide quantum dot solution, wherein said metal chalcogenide quantum dots are capped with hydrocarbon organic ligands with a chain having more than ten carbons and dispersed in a non-polar solvent which is not miscible with said polar solvent; and
- doing phase transfer ligand exchange by mixing said metal chalcogenide quantum dot solution with said ligand solution, wherein two phases are obtained: a top phase containing said non-polar solvent and exchanged hydrocarbon organic ligands, and a bottom phase containing ligand-exchanged metal chalcogenide quantum dots.

13. The method of claim 12, further comprising preparing a quantum dots ink by performing the following steps:
- precipitating the ligand exchanged metal chalcogenide quantum dots by adding a polar protic solvent into said bottom phase;
- drying the precipitated ligand exchanged metal chalcogenide quantum dots under vacuum; and
- dispersing the dried ligand exchanged metal chalcogenide quantum dots in a volatile solvent to make the quantum dots ink with a desired concentration.

14. The method of claim 13, wherein said volatile solvent is butylamine or a mixture of butylamine and a polar solvent.

15. An optoelectronic device, comprising the quantum dot population of any of claims 1 to 10.
